# EUROPEAN PATENT SPECIFICATION

(11) **EP 2 636 207 B1**
(45) Date of publication and mention of the grant of the patent: **17.09.2014**
(21) Application number: 11794760.6
(22) Date of filing: 14.12.2011
(51) Int. Cl.: H04L 29/08

(54) **LOCATION BASED WIRELESS TOWER CACHING**
POSITION ABHÄNGIGE SPEICHERUNG IN EINEM DRAHTLOSEN AUFSATZ
CACHE BASE SUR LA POSITION DANS UN TOUR SANS FIL

(30) Priority: 23.12.2010 US 977980
(43) Date of publication of application: 11.09.2013
(73) Proprietor: International Business Machines Corporation, Armonk, NY 10504 (US)
(72) Inventor: SHOOK, Aaron, Kyle, Hampshire SO21 2JN (GB); BURCKART, Erik, John, Winchester Hampshire SO21 2JN (GB); IVORY, Andrew, Hampshire SO21 2JN (GB); CUOMO, Gennaro, North Carolina 27709 (US); MOORE, Victor, Florida 33487 (US)
(74) Representative: Gascoyne, Belinda Jane
(86) International application number: PCT/EP2011/072727
(87) International publication number: WO 2012/084636

(56) References cited:
- US-B1- 7 346 360

## Description

### Field of the Invention

The present invention relates to content retrieval services provided in a radio access network and more particularly to the caching of retrieved content in a radio access network.

### Description of the Related Art

The radio access network (RAN) provides for the foundation of modern cellular telephony. The RAN functions to join different end user mobile devices to a core network (CN) such that individuals can enjoy telephonic and data communications wirelessly within a geographic area covered by the various base stations of the radio access network. Generally speaking, the RAN provides the requisite infrastructure to pass both voice and data traffic from the over-the-air medium to both the terrestrial circuit switched communication network and the packet switched data communications network inclusive of the global Internet.

At present, several standards have been implemented in connection with the RAN Examples include the global system for mobile communications (GSM), the universal mobile telecommunications system (UMTS) and the GSM "Edge" RAN (GERAN). The RAN generally includes multiple different radio network controllers (RNC) each managing a set of base stations providing wireless connectivity to a geographic cell. The entirety of the different RNCs of the RAN are linked to what is known as the cellular data core or CN through a gateway known as the serving generalized radio packet service node (SGSN). The CN provides various services to customers who are connected by the RAN. One of the main functions is to route calls across the public switched telephone network (PSTN). Another is to route data packets onto an Internet protocol (IP) network such as the global Internet so that end users of the RAN can access services provided by a content delivery network (CDN). To that end, the CN includes a gateway known as the gateway GPRS service node (GGSN).

The typical CDN can provide for advanced content delivery services such as content caching and content filtering. Content caching refers to the intermediate temporary storage of previously retrieved content under the assumption that a temporally proximate subsequent request for the content can be satisfied from temporary storage rather than repeating a more time consuming request for content in the CDN. In contrast, content filtering refers to the restriction of the delivery of requested content when the content meets a particular profile such as being published by a particular source or incorporating particular subject matter. In both instances, the packet processing requisite to performing advanced content services often demand that those services are provided within the CN where the communications protocol utilized in the CN is consistent with that of the global Internet-namely the transport control protocol (TCP) over IP.

Even still, some have suggested placing support for content services such as content caching and content filtering within the RAN. In this regard, United States Patent Application Publication No. 20100034089 by Kovvali et al. suggests the placement of content caching services within the RAN and the extraction of TCP/IP payloads from the RAN protocol specific to the RAN. Of note, unlike traditional caching schemes in a traditional computing environments, in a mobile computing environment such as that supported by a RAN, end users traverse the RAN communicating directly with different base stations at different wireless towers along a path of travel. Thus, placing long lasting content services like caching in a base station can result in cached content being rendered largely useless as an end user travels out of range of the wireless tower of the base station. US7346360 discloses a method for caching data in a wireless tower in a radio access network.

### BRIEF SUMMARY OF THE INVENTION

Embodiments of the present invention seek to address deficiencies of the art in respect to content caching in the RAN and provide a novel and non-obvious method, system and computer program product for wireless tower caching. In accordance with one embodiment, a method for wireless tower caching in a RAN can include receiving a response to a request from an end user device wirelessly coupled to a base station of the RAN, determining geographic positioning data for the response and identifying a most geographically relevant wireless tower coupled to the RAN relative to the determined geographic positioning data (such as the wireless tower closest to the determined geographic positioning data). Thereafter, the response can be cached at a cache in a base station of the identified wireless tower. In this way, the cached content can remain relevant for a significant period of time in as much as the correlation between a likely position of the end user device and the content cached at the base station of the wireless tower at the time of use of the cached content is strong.

In another embodiment of the invention, a RAN based data processing system can be configured for location based wireless tower caching. The system can include different base stations each disposed in a respective wireless tower and each including an antenna, a receiver, a transmitter, a processor, a local cache, and a network interface to a data communications network. The system also can include an RNC coupled to each base station over the data communications network. Further, a caching module can be disposed in each base station and coupled to a cache. Finally, a location based wireless tower caching module can execute in the RNC.

The module can include program code enabled to receive a response to a data request from one of the base stations on behalf of an end user device, to determine geographic positioning data for the response, to identify a wireless tower coupled to the RAN and positioned closest to the determined geographic positioning data, and to direct caching of the response at a cache in a particular one of the base stations of the identified wireless tower. For instance, in one aspect of the embodiment, the response can include a map generated from an address supplied by the end user device or a point of interest of a map generated from an address supplied by the end user device. In another aspect of the embodiment, the geographic positioning data can include geographic positioning system (GPS) coordinates. In yet another aspect of the embodiment, the geographic positioning data can include at least a portion of the address supplied by the end user device.

### BRIEF DESCRIPTION OF THE SEVERAL VIEWS OF THE DRAWINGS

Embodiments of the invention will now be described, by way of example only, with reference to the accompanying drawings in which:
Figure 1 is a pictorial illustration of a process for wireless tower caching in a RAN;
Figure 2 is a schematic illustration of a RAN data processing system configured for wireless tower caching; and,
Figure 3 is a flow chart illustrating a process for wireless tower caching in a RAN

### DETAILED DESCRIPTION OF THE INVENTION

Embodiments of the invention provide for wireless tower caching in a RAN. In accordance with an embodiment of the invention, a content request can be received from a mobile communications device in a RAN. The requested content, for example a map or one or more points of interest associated with a geographic position on a map, can be retrieved into the RAN from a content server disposed in a communicatively coupled data communications network such as the global Internet. Thereafter, geographic coordinates associated with the requested content can be compared to known geographic coordinates of different wireless towers in the RAN. Finally, a wireless tower in the RAN with known geographic coordinates most geographically relevant to the geographic coordinates associated with the requested content can be selected and the requested content can be cached in a base station for the selected wireless tower.

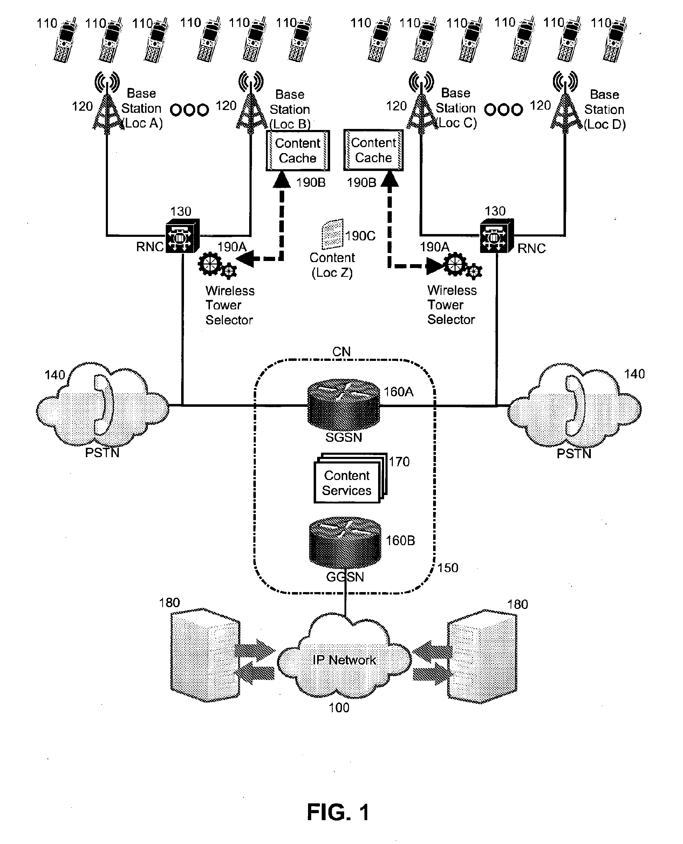

In further illustration, Figure 1 pictorially shows a process for wireless tower caching in a RAN. As shown in Figure 1, a cellular telecommunications network can be provided to include different base stations 120 arranged to provide wireless telephonic access to different end user devices 110 for the PSTN 140. Clusters of the base stations 120 can be communicatively linked to a common RNC 130 that in turn can be coupled to a CN 150 thus forming a RAN. The CN 150 can include both a SGSN 160A acting as a gateway for traffic between the CN 150, the PSTN 140 and each RNC 130, and also a GGSN 160B acting as a gateway between the CN 150 and the data communications network 100--typically the global Internet. The CN 150 itself can support a number of content services 170 as is well known in the art.

Of note, a data processing system for location based wireless tower caching 190A can be disposed in the RNC 130 and can be configured for communicative coupling to different content caches 190B each executing in respectively different base stations 120. The data processing system 190A can include program code that when executed in the data processing system, processes location based content 190C retrieved in response to a content request originating from an end user device 110 by way of a corresponding base station 120, from a content server 180 on the data communications network 100 by way of the CN 150. Specifically, the data processing system 190A can determine geographic positioning data associated with the content 190C such as particular GPS coordinates associated with a point of interest on a map, or an address from which a map is produced. The data processing system 190A further can identify a wireless tower hosting a correspondingly different one of the base stations 120 at a position most geographically relevant to the geographic positioning data associated with the content 190C (for example the closest wireless tower). Thereafter, the data processing system 190A can direct caching of the content 190C in a base station 120 in the selected wireless tower.

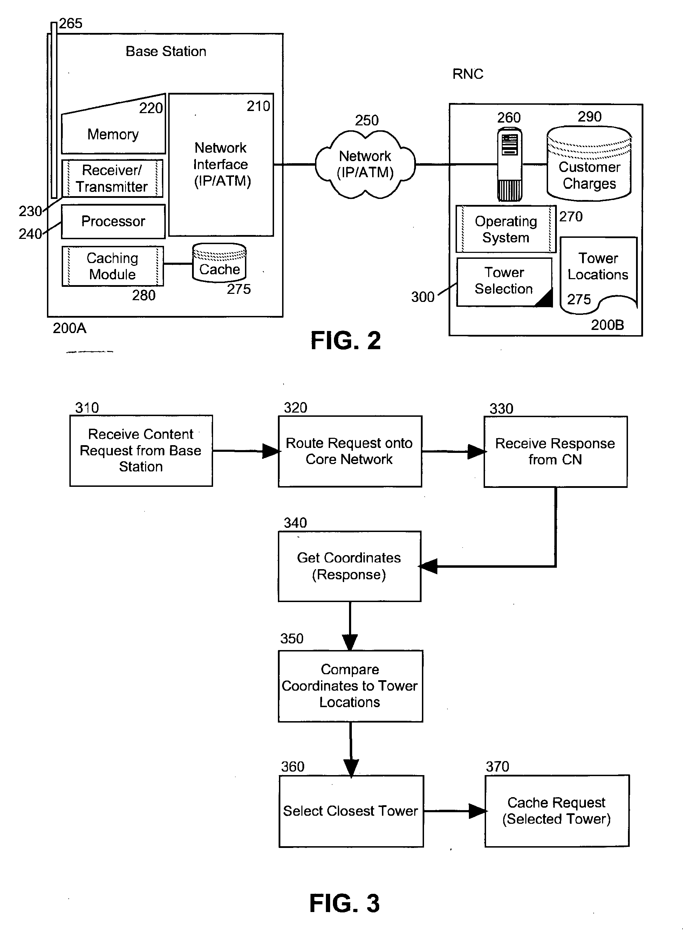

In yet further illustration, Figure 2 is a schematic illustration of a RAN data processing system configured for wireless tower caching. The system can include a base station 200A coupled to an RNC 200B over a communications network 250, commonly an IP network or an asynchronous transfer mode (ATM) network. The base station 200A can include a receiver/transmitter 230 receiving over-the-air communications from different end user devices within transmission range of the base station 200A by way of antenna 265, and routing the same to the RNC 200B by way of a network interface 210. A processor 240 can be provided to perform computational processing on received data as the data is placed in memory 220. A caching module 280 coupled to a content cache 275 can execute by the processor 240 of the base station 200A. The caching module 280 can perform caching of cacheable content in the cache 275 for content received in the base station 200A in response to requests from coupled end user devices and from directives received from the RNC 200B.

The RNC 200B, in turn, can include a host computer 260 with at least one processor and memory supporting the execution of an operating system 270. The operating system 270 in turn can host the execution of a location-based wireless tower caching module 300. The location-based wireless tower caching module 300 can include program code that when executed in the operating system 270, can receive responses to requests from over the data communications network 250 can determine geographic positioning data for a response to a request from over the data communications network 250. The program code further can compare the determined geographic positioning data to a list of known locations 275 of different wireless towers communicatively linked to the RNC 200B. Finally, the program code can direct caching of the response in a base station 200A of a wireless tower identified as closest to the geographic positioning data of the response.

In even yet further illustration, Figure 3 is a flow chart illustrating a process for wireless tower caching in a RAN. Beginning in block 310, a content request can be received from a base station on behalf of an end user device wirelessly accessing the base station. In block 320, the request can be routed onto the CN for ultimate processing by a content provider on the global Internet. In block 330, a response to the request can be received from over the CN and in block 340 geographic positioning data for the response can be determined. For example, the GPS coordinates of a point of interest on a map, or an address from which a map has been generated in the response can be determined. In block 350, the determined geographic positioning data can be compared to a list of known locations of wireless towers communicatively coupled to the RAN. Subsequently, in block 350 a closest one of the wireless towers can be selected and in block 370 the response can be cached at a base station of the selected wireless tower.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, radiofrequency, and the like, or any suitable combination of the foregoing. Computer program code for carrying out operations for aspects of the present invention may be written in any combination of one or more programming languages, including an object oriented programming language and conventional procedural programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention have been described above with reference to flowchart illustrations and/or block diagrams of methods, apparatus (systems) and computer program products according to embodiments of the invention. In this regard, the flowchart and block diagrams in the Figures illustrate the architecture, functionality, and operation of possible implementations of systems, methods and computer program products according to various embodiments of the present invention. For instance, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

It also will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks. The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

Finally, the terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope of the invention. The embodiment was chosen and described in order to best explain the principles of the invention and the practical application, and to enable others of ordinary skill in the art to understand the invention for various embodiments with various modifications as are suited to the particular use contemplated.

## Claims

1. A method for caching data in a wireless tower in a radio access network, RAN, comprising:
receiving a response to a data request, the response to the data request coming from an end user device wirelessly coupled to a base station of the RAN;
determining geographic positioning data for the response;
identifying a most geographically relevant wireless tower coupled to the RAN relative to the determined geographic positioning data; and,
caching the response at a cache in a base station of the identified wireless tower.

2. The method of claim 1, wherein receiving a response to a data request from an end user device wirelessly coupled to a base station of the RAN, comprises receiving a response in a radio network controller (RNC) to a request from an end user device wirelessly coupled to a base station of the RAN.

3. The method of claim 1 or claim 2, wherein the response comprises a map generated from an address supplied by the end user device.

4. The method of claim 1 or claim 2, wherein the response comprises a point of interest of a map generated from an address supplied by the end user device.

5. The method of any of the preceding claims, wherein the geographic positioning data comprises geographic positioning system, GPS, coordinates.

6. The method of claim 3, wherein the geographic positioning data comprises at least a portion of the address supplied by the end user device.

7. A radio access network, RAN, based data processing system configured for location based wireless tower caching, the system comprising:
a plurality of different base stations each disposed in a respective wireless tower and each comprising an antenna, a receiver, a transmitter, a processor, a local cache, and a network interface to a data communications network;
a radio network controller (RNC) coupled to each base station over the data communications network;
a caching module disposed in each base station and coupled to a cache; and,
a location based wireless tower caching module executing in the RNC, the module comprising program code enabled to receive a response to a data request from one of the base stations on behalf of an end user device, to determine geographic positioning data for the response, to identify a most geographically relevant wireless tower coupled to the RAN relative to the determined geographic positioning data, and to direct caching of the response at a cache in a particular one of the base stations of the identified wireless tower.

8. The system of claim 7, wherein the response comprises a map generated from an address supplied by the end user device.

9. The system of claim 7, wherein the response comprises a point of interest of a map generated from an address supplied by the end user device.

10. The system of any of claims 7 to 9, wherein the geographic positioning data comprises geographic positioning system, GPS, coordinates.

11. The system of claim 8, wherein the geographic positioning data comprises at least a portion of the address supplied by the end user device.

12. A computer program product for wireless tower caching in a radio access network , RAN, the computer program product comprising:
a computer readable storage medium having computer readable program code embodied therewith, the computer readable program code comprising:
computer readable program code for receiving a response to a request from an end user device wirelessly coupled to a base station of the RAN;
computer readable program code for determining geographic positioning data for the response;
computer readable program code for identifying a most geographically relevant wireless tower coupled to the RAN relative to the determined geographic positioning data; and,
computer readable program code for caching the response at a cache in a base station of the identified wireless tower.

13. The computer program product of claim 12, wherein the computer readable program code for receiving a response to a request from an end user device wirelessly coupled to a base station of the RAN, comprises computer readable program code for receiving a response in a radio network controller (RNC) to a request from an end user device wirelessly coupled to a base station of the RAN.

14. The computer program product of claim 12, wherein the response comprises a map generated from an address supplied by the end user device.

15. The computer program product of claim 12, wherein the response comprises a point of interest of a map generated from an address supplied by the end user device.

## Patentansprüche

1. Verfahren zum Zwischenspeichern von Daten in einem Sendeturm in einem Funk-Zugriffsnetzwerk, RAN, wobei das Verfahren umfasst:
Empfangen einer Antwort auf eine Datenanforderung, wobei die Antwort auf die Datenanforderung von einer Endnutzer-Einheit ausgeht, die drahtlos mit einer Basisstation des RAN verbunden ist;
Ermitteln von geografischen Positionsdaten für die Antwort;
Identifizieren eines geografisch wichtigsten Sendeturms relativ zu den ermittelten geografischen Positionsdaten, wobei der drahtlose Aufsatz mit dem RAN verbunden ist; und
Zwischenspeichern der Antwort in einem Zwischenspeicher in einer Basisstation des identifizierten Sendeturms.

2. Verfahren nach Anspruch 1, wobei das Empfangen einer Antwort auf eine Datenanforderung von einer Endnutzer-Einheit, die drahtlos mit einer Basisstation des RAN verbunden ist, ein Empfangen einer Antwort in einer Funk-Netzwerksteuereinheit (RNC) auf eine Anforderung von einer Endnutzer-Einheit umfasst, die drahtlos mit einer Basisstation des RAN verbunden ist.

3. Verfahren nach Anspruch 1 oder Anspruch 2, wobei die Antwort eine Karte umfasst, die von einer Adresse erzeugt wird, die von der Endnutzer-Einheit bereitgestellt wird.

4. Verfahren nach Anspruch 1 oder Anspruch 2, wobei die Antwort ein markantes Detail auf einer Karte umfasst, die von einer Adresse erzeugt wird, die von der Endnutzer-Einheit bereitgestellt wird.

5. Verfahren nach einem der vorhergehenden Ansprüche, wobei die geografischen Positionsdaten Koordinaten des globalen Positions-Bestimmungssystems GPS umfassen.

6. Verfahren nach Anspruch 3, wobei die geografischen Positionsdaten mindestens einen Abschnitt der Adresse umfassen, die durch die Endnutzer-Einheit bereitgestellt wird.

7. Datenverarbeitungs-System auf der Grundlage eines Funk-Zugriffsnetzwerk RAN, das zur positionsabhängigen Zwischenspeicherung in einem Sendeturm ausgelegt ist, wobei das System umfasst:
eine Vielzahl verschiedener Basisstationen, die jeweils in einem zugehörigen Sendeturm angeordnet sind und eine Antenne, einen Empfänger, einen Sender, einen Prozessor, einen lokalen Zwischenspeicher und eine Netzwerk-Schnittstelle zu einem Datenübertragungs-Netzwerk umfassen;
eine Funk-Netzwerksteuereinheit (RNC), die mit jeder Basisstation über das Datenübertragungs-Netzwerk verbunden ist;
ein Zwischenspeicherungs-Modul, das in jeder Basisstation angeordnet ist und mit einem Zwischenspeicher verbunden ist; und
ein positionsabhängiges Zwischenspeichermodul in dem Sendeturm, das in der RNC betrieben wird, wobei das Modul Programmcode umfasst, der Empfangen einer Antwort auf eine Datenanforderung von einer der Basisstationen im Auftrag einer Endnutzer-Einheit, Ermitteln geografischer Positionsdaten für die Antwort, Identifizieren eines relativ zu den ermittelten Positionsdaten geografisch wichtigsten, mit dem RAN verbundenen Sendeturm und Weiterleiten der Antwort an einen Zwischenspeicher in einer bestimmten Basisstation unter den Basisstationen des identifizierten Sendeturms erlaubt.

8. System nach Anspruch 7, wobei die Antwort eine Karte umfasst, die von einer Adresse erzeugt wird, die von der Endnutzer-Einheit bereitgestellt wird.

9. System nach Anspruch 7, wobei die Antwort ein markantes Detail einer Karte umfasst, die von einer Adresse erzeugt wurde, die von der Endnutzer-Einheit bereitgestellt wird.

10. System nach einem der Ansprüche 7 bis 9, wobei die geografischen Positionsdaten Koordinaten des globalen Positions-Bestimmungssystems GPS umfassen.

11. System nach Anspruch 8, wobei die geografischen Positionsdaten mindestens einen Abschnitt der Adresse umfassen, die von der Endnutzer-Einheit bereitgestellt wird.

12. Computerprogramm-Produkt für Zwischenspeicherung in einem Sendeturm in einem Drahtloszugriffs-Netzwerk, RAN, wobei das Computerprogramm-Produkt umfasst:
ein computerlesbares Speichermedium mit einem darin enthaltenen computerlesbaren Programmcode, wobei der computerlesbare Programmcode umfasst:
computerlesbaren Programmcode zum Empfangen einer Antwort auf eine Anforderung von einer Endnutzer-Einheit, die drahtlos mit einer Basisstation des RAN verbunden ist;
computerlesbaren Programmcode zum Ermitteln geografischer Positionsdaten für die Antwort;
computerlesbaren Programmcode zum Identifizieren eines relativ zu den geografischen Positionsdaten wichtigsten Sendeturms, der mit dem RAN verbunden ist; und
computerlesbaren Programmcode zum Zwischenspeichern der Antwort in einem Zwischenspeicher in einer Basisstation des identifizierten Sendeturms.

13. Computerprogramm-Produkt nach Anspruch 12, wobei der computerlesbare Programmcode zum Empfangen einer Antwort auf eine Anforderung von einer Endnutzer-Einheit, die drahtlos mit einer Basisstation des RAN verbunden ist, computerlesbaren Programmcode zum Empfangen einer Antwort in einer Funk-Netzwerksteuereinheit (RNC) auf eine Anforderung von einer Endnutzer-Einheit umfasst, die mit einer Basisstation des RAN verbunden ist.

14. Computerprogramm-Produkt nach Anspruch 12, wobei die Antwort eine Karte umfasst, die von einer Adresse erzeugt wird, die von der Endnutzer-Einheit bereitgestellt wird.

15. Computerprogramm-Produkt nach Anspruch 12, wobei die Antwort ein markantes Detail einer Karte umfasst, die von einer Adresse erzeugt wird, die von der Endnutzer-Einheit bereitgestellt wird.

## Revendications

1. Procédé de mise en mémoire cache de données dans un pylône dans un réseau d'accès radio, RAN, comprenant de :
recevoir une réponse à une demande de données, la réponse à la demande de données émanant d'une unité d'utilisateur final connectée sans fil à une station de base du RAN ;
déterminer des données de positionnement géographique pour la réponse ;
identifier un pylône le plus pertinent géographiquement connecté au RAN relativement aux données de positionnement géographiques déterminées ; et
stocker la réponse dans une mémoire cache dans une station de base du pylône identifié.

2. Procédé selon la revendication 1, dans lequel la réception d'une réponse à une demande de données émanant d'une unité d'utilisateur final connectée sans fil à une station de base du RAN comprend de recevoir une réponse dans un contrôleur de radioréseau (RNC) à une demande émanant d'une unité d'utilisateur final connecté sans fil à une station de base du RAN.

3. Procédé selon la revendication 1 ou 2, dans lequel la réponse comprend une carte générée à partir d'une adresse fournie par l'unité d'utilisateur final.

4. Procédé selon la revendication 1 ou 2, dans lequel la réponse comprend un point d'intérêt d'une carte générée à partir d'une adresse fournie par l'unité d'utilisateur final.

5. Procédé selon l'une quelconque des revendications précédentes, dans lequel les données de positionnement géographique comprennent des coordonnées de système de positionnement géographique, GPS.

6. Procédé selon la revendication 3, dans lequel les données de positionnement géographique comprennent au moins une portion de l'adresse fournie par l'unité d'utilisateur final.

7. Système de traitement de données basé sur un réseau d'accès radio, RAN, configuré pour, dépendant d'une position, une mise en mémoire cache dans un pylône, le système comprenant :
une pluralité de différentes stations de base disposées chacune dans un pylône respective et comprenant chacune une antenne, un récepteur, un émetteur, un processeur, une mémoire cache locale et une interface de réseau vers un réseau de communication de données ;
un contrôleur de radioréseau (RNC) connecté à chaque station de base via le réseau de communication de données ;
un module de mémoire cache disposé dans chaque station de base et connecté à une mémoire cache ; et
un module de mémoire cache, dépendant d'une position, dans le pylône s'exécutant dans le RNC, le module comprenant du code de programme activé pour recevoir une réponse à une demande de données émanant d'une des stations de base pour le compte d'une unité d'utilisateur final, afin de déterminer des données de positionnement géographique pour la réponse, identifier un pylône le plus pertinent géographiquement connecté au RAN relativement aux données de positionnement géographique déterminées et relayer la réponse à une mémoire cache dans une station de base particulière des stations de base du pylône identifié.

8. Système selon la revendication 7, dans lequel la réponse comprend une carte générée à partir d'une adresse fournie par l'unité d'utilisateur final.

9. Système selon la revendication 7, dans lequel la réponse comprend un point d'intérêt d'une carte générée à partir d'une adresse fournie par l'unité d'utilisateur final.

10. Système selon l'une quelconque des revendications 7 à 9, dans lequel les données de positionnement géographique comprennent des coordonnées de système de positionnement géographique, GPS.

11. Système selon la revendication 8, dans lequel les données de positionnement géographique comprennent au moins une portion de l'adresse fournie par l'unité d'utilisateur final.

12. Produit de programme informatique pour la mise en mémoire cache dans un pylône dans un réseau d'accès radio, RAN, le produit de programme informatique comprenant :
un support de mémorisation lisible par ordinateur renfermant un code de programme lisible par ordinateur, le code de programme lisible par ordinateur comprenant :
un code de programme lisible par ordinateur pour recevoir une réponse à une demande émanant d'une unité d'utilisateur final couplé sans fil à une station de base du RAN ;
un code de programme lisible par ordinateur pour déterminer des données de positionnement géographique pour la réponse ;
un code de programme lisible par ordinateur pour identifier un pylône le plus pertinent géographiquement connecté au RAN relativement aux données de positionnement géographique déterminées ; et
un code de programme lisible par ordinateur pour mettre une réponse en mémoire cache dans une mémoire cache dans une station de base du pylône identifié.

13. Produit de programme informatique selon la revendication 12, dans lequel le code de programme lisible par ordinateur pour recevoir une réponse à une demande émanant d'une unité d'utilisateur final connecté sans fil à une station de base du RAN, comprend un code de programme lisible par ordinateur pour recevoir une réponse dans un contrôleur de radioréseau (RNC) à une demande émanant d'une unité d'utilisateur final connecté sans fil à une station de base du RAN.

14. Produit de programme informatique selon la revendication 12, dans lequel la réponse comprend une carte générée à partir d'une adresse fournie par l'unité d'utilisateur final.

15. Produit de programme informatique selon la revendication 12, dans lequel la réponse comprend un point d'intérêt d'une carte générée à partir d'une adresse fournie par l'unité d'utilisateur final.
